# EUROPEAN PATENT APPLICATION

(11) **EP 4 783 329 A1**
(43) Date of publication of application: **29.07.2026**
(21) Application number: 24868000.1
(22) Date of filing: 20.08.2024
(51) Int. Cl.: H01M 50/289, H01M 10/48, H01M 50/204, H01M 50/249, H01M 50/284, H01M 50/298, H01M 50/342, H01M 50/569

(54) **HOUSING FOR BATTERY PACK AND BATTERY PACK**

(30) Priority: 20.09.2023 JP 2023151962; 20.09.2023 JP 2023151964
(71) Applicant: Kubota Corporation, Osaka-shi, Osaka 530-0011 (JP)
(72) Inventor: KISHI, Shinji, Sakai-shi, Osaka 592-8331 (JP); KIMURA, Ryota, Sakai-shi, Osaka 592-8331 (JP)
(74) Representative: Müller-Boré & Partner Patentanwälte PartG mbB
(86) International application number: PCT/JP2024/029483
(87) International publication number: WO 2025/062919

(57) **Abstract**

The present application has an object to provide a housing 400 of a battery pack 40 and the battery pack 40, the battery pack 40 being capable of suppressing an influence on a component in the housing 400, even when an internal pressure rise occurs in the housing 400. The problem is solved by the housing 400 of the battery pack 40 mounted on a hybrid system 10, including the housing main body 410 having a first accommodating portion 411 accommodating a battery module 50 for supplying electricity to a motor generator 2 of the hybrid system 10 and a second accommodating portion 412 accommodating a control circuit of the battery module 50, a housing cover 420 mounted on the housing main body 410, and a partition wall part 415 provided between the first accommodating portion 411 and the second accommodating portion 412 in the housing main body 410 and partitions a space of the first accommodating portion 412 and a space of the second accommodating portion 412 from each other.

## Description

### Technical Field

The present invention relates to a housing of a battery pack mounted on a hybrid system and a battery pack.

### Background Art

PTL 1 discloses a battery mounting structure used for electric automobiles and a hybrid-type vehicles. This battery mounting structure includes a case in which a plurality of battery modules for driving a vehicle are accommodated on a lower side of a floor panel of a vehicle interior. The plurality of battery modules are divided into a lower-stage module and an upper-stage module, and the case has a lower-part case member made of metal, an intermediate-part case member made of metal, and an upper-part case member for covering a predetermined region of an upper-surface part of the intermediate-part case member from above. The lower-stage module is fixed to a bottom part of the lower-part case member, and the intermediate-part case member is fixed to the lower-part case member so as to cover the lower-stage module from above, and the lower-part module is accommodated in a water-tight manner. The upper-stage module is fixed in a state of close contact with the upper surface part of the intermediate-part case member in the predetermined area, the upper-part case member is formed in a container shape having an opening part in a bottom part, and in a state where the predetermined area is covered, and a peripheral part of the opening part is in a state of close contact with the upper-surface part of the intermediate-part case member, the upper-stage module is accommodated in a water-tight manner. Then, the lower-part case member is mounted on the lower side of the floor panel, whereby the case is fixed to the vehicle.

PTL 2 discloses a battery pack device used for an electric automobile, for example, and constituted by batteries stacked in plural stages. This battery pack device includes a first battery group constituted by disposing a plurality of batteries on the same plane and a second battery group stacked on the first battery group with a battery tray between them and constituted by disposing a plurality of the same batteries as the batteries on the same plane in the battery tray, and includes a battery-pack main body including a battery part in which each battery is electrically connected to each other and a main body case accommodating the battery part. The battery has a cuboid shape and can be installed in a first attitude in which a height in a direction in which the second battery group is stacked on the first battery group is small and in a second attitude in which a position of a terminal is higher in the stacking direction than a position of a terminal of the battery in the first attitude. This battery-pack device is characterized in that, in the batteries of the first battery group, a first battery is disposed in the second attitude, a hole through which a terminal of the first battery protrudes to the second battery group side by passing of the vicinity of the terminal of the first battery is formed in the battery tray, in the batteries of the second battery group, the second battery in the vicinity of the hole is disposed in the first attitude, and the first battery and the second battery are electrically connected to each other by a connecting member whose shape is fixed.

In the housing of the battery pack, a large number of battery cells are accommodated. As this battery cell, a lithium-ion battery or a nickel-hydrogen battery is used. In the battery cell, a valve (safety valve) for releasing a gas when an internal pressure becomes high is provided. Since the housing of the battery pack is constituted in a water-tight manner, when abnormality occurs in the battery cell in the housing, the valve of the cell is operated, and the gas is released and then, an internal pressure of the housing rapidly rises. In the housing, other than the battery cell, a control circuit and components such as a wiring, connectors and the like are accommodated, and it is desired that an influence on these components by the internal-pressure rise of the housing is suppressed.

In addition, in the housing of the battery pack, battery cells in the number required for obtaining a desired voltage are accommodated. As this battery cell, a lithium-ion battery or a nickel-hydrogen battery is used. The battery cell is provided in a substantially cuboid shape, and a plurality of the battery cells are disposed in a limited space in the housing. Since the battery cell generates a heat by a chemical reaction of charging/discharging, it is important to efficiently release the heat emitted from the battery cell accommodated in the state of close contact in the housing to the outside.

### Citation List

### Patent Literature

PTL 1: Japanese Patent Application Publication No. 2020-001451
PTL 2: Japanese Patent Application Publication No. 2006-080042

### Summary of Invention

### Technical Problem

The present invention was made in view of the above-described circumstances and has an object to provide a housing of a battery pack and a battery pack which can suppress an influence on a component in a housing even when an internal-pressure rise occurs in the housing. In addition, it is an object to provide a battery pack which can efficiently release a heat of a battery cell to an outside.

### Solution to Problem

A first aspect of the present invention is a housing of a battery pack mounted on a hybrid system and is a housing of a battery pack including a housing main body having a first accommodating portion for accommodating a battery module for supplying electricity to a motor generator of the hybrid system and a second accommodating portion for accommodating a control circuit of the battery module, a housing cover mounted on the housing main body, and a partition wall part which is provided between the first accommodating portion and the second accommodating portion in the housing main body and partitions a space of the first accommodating portion for accommodating a battery module and a space of the second accommodating portion from each other.

A second aspect of the present invention is a battery pack mounted on a hybrid system and including a battery module for supplying electricity to a motor generator of the hybrid system, a control circuit for controlling the battery module, and a housing for accommodating the battery module and the control circuit, in which the housing has a housing main body having a first accommodating portion for accommodating the battery module and a second accommodating portion for accommodating the control circuit, a housing cover mounted on the housing main body, a partition wall part provided between the first accommodating portion and the second accommodating portion of the housing main body, and the control circuit includes a BMU (Battery Management Unit) for controlling a voltage of the entire battery module.

A third aspect of the present invention is a battery pack mounted on a hybrid system and including a battery module for supplying electricity to a motor generator of the hybrid system, a control circuit for controlling the battery module, a housing for accommodating the battery module and the control circuit, and a heat conducting member provided between each of the battery module and the housing and having insulation.

### Advantageous Effects of Invention

According to the present invention, even when the internal-pressure rise occurs in the housing, a housing of a battery pack and a battery pack which can suppress an influence on a component in the housing can be provided. In addition, according to the present invention, a battery pack which can efficiently release a heat of a battery cell to an outside can be provided.

### Brief Description of Drawings

[Fig. 1]

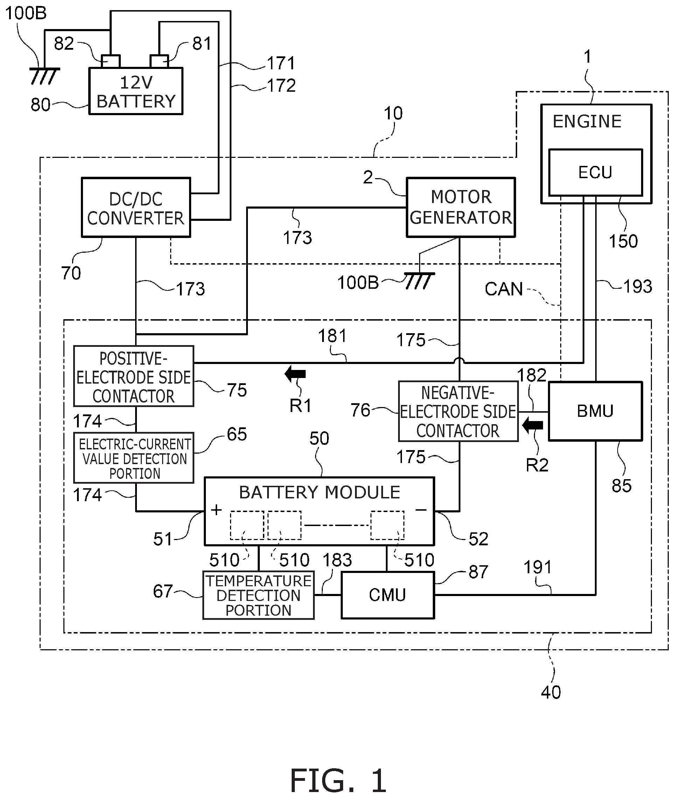

   Fig. 1 is a block diagram illustrating a hybrid system.
[Fig. 2]

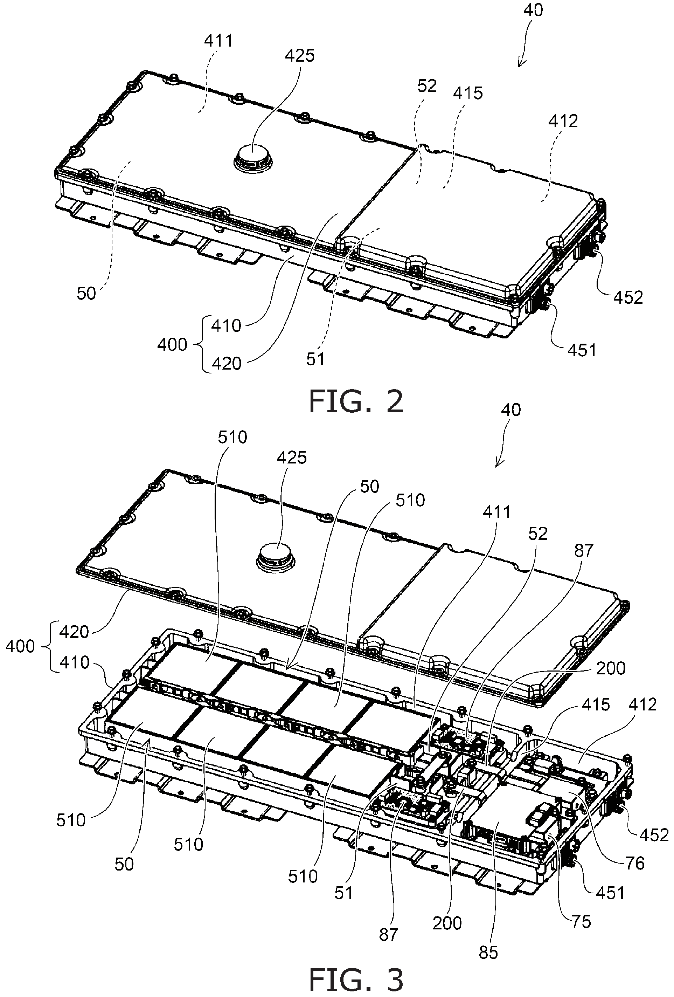

   Fig. 2 is an appearance perspective view exemplifying a battery pack according to this Embodiment.
[Fig. 3]
   Fig. 3 is a partial exploded perspective view exemplifying a battery pack according to this Embodiment.
[Fig. 4]

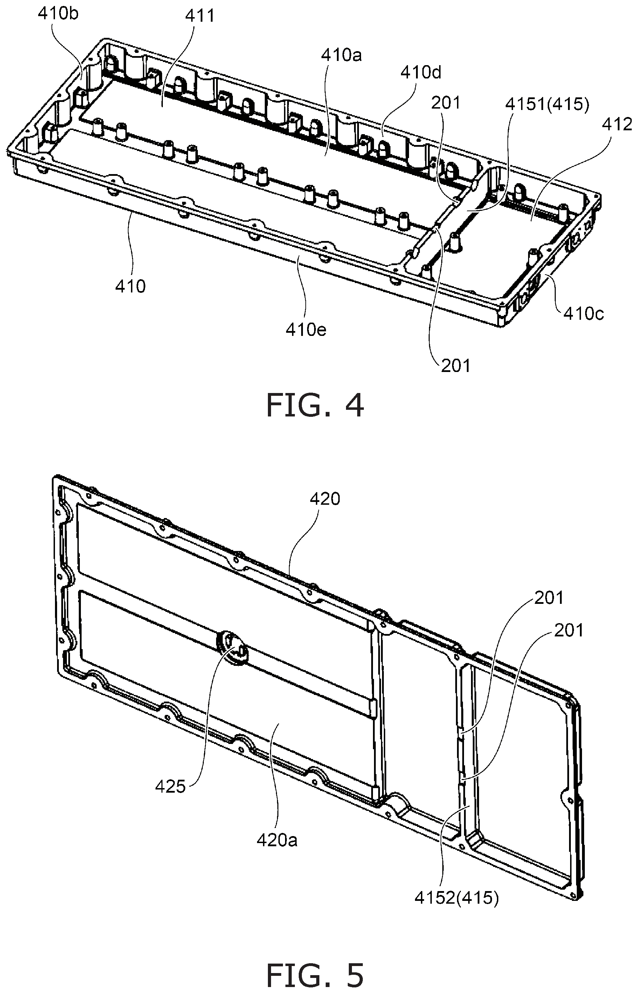

   Fig. 4 is an appearance perspective view exemplifying a housing main body of a housing according to this Embodiment.
[Fig. 5]
   Fig. 5 is an appearance perspective view exemplifying a battery pack using a housing according to this Embodiment.
[Fig. 6]

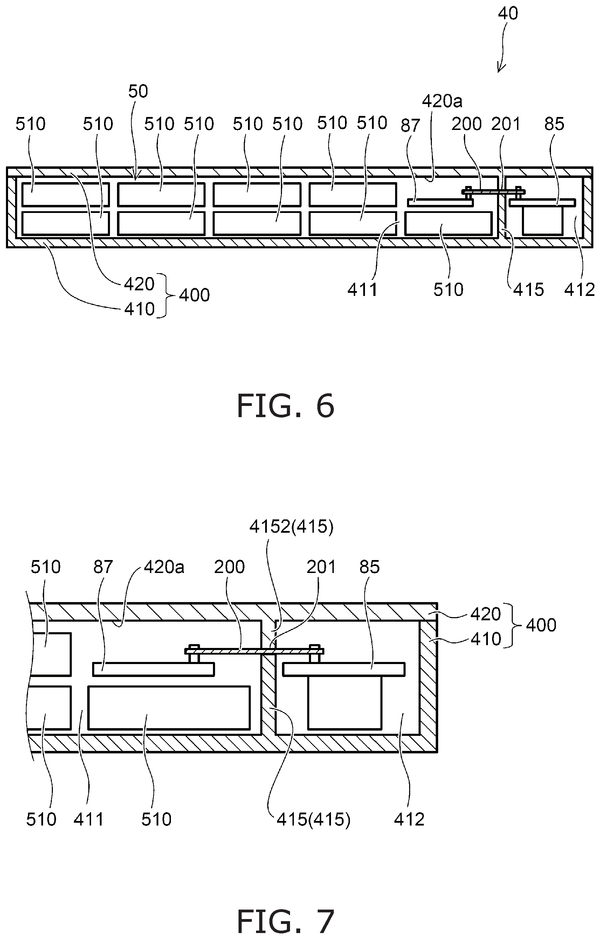

   Fig. 6 is a schematic sectional view exemplifying a battery pack using a housing according to this Embodiment.
[Fig. 7]
   Fig. 7 is an enlarged schematic sectional view of a periphery of a partition wall part illustrated in Fig. 6.
[Fig. 8]

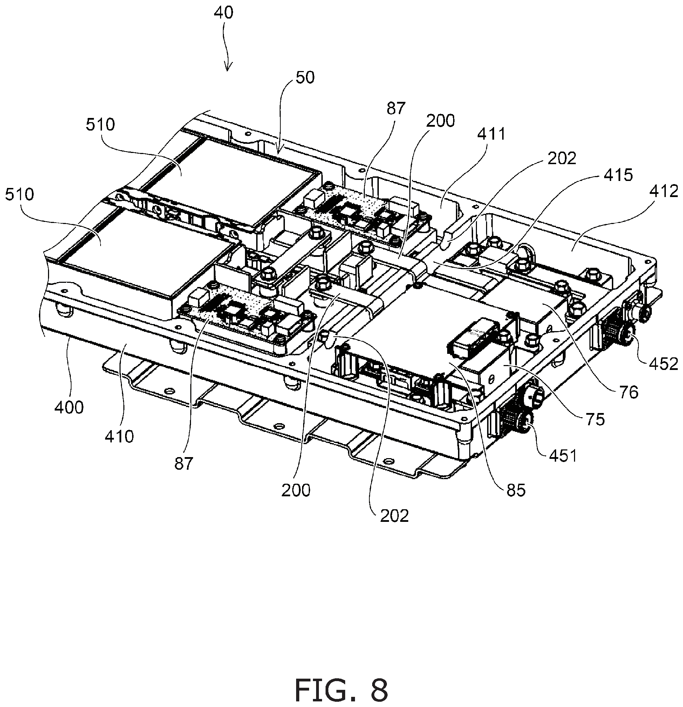

   Fig. 8 is a partial perspective view exemplifying a constitution of a periphery of the partition wall part.
[Fig. 9]

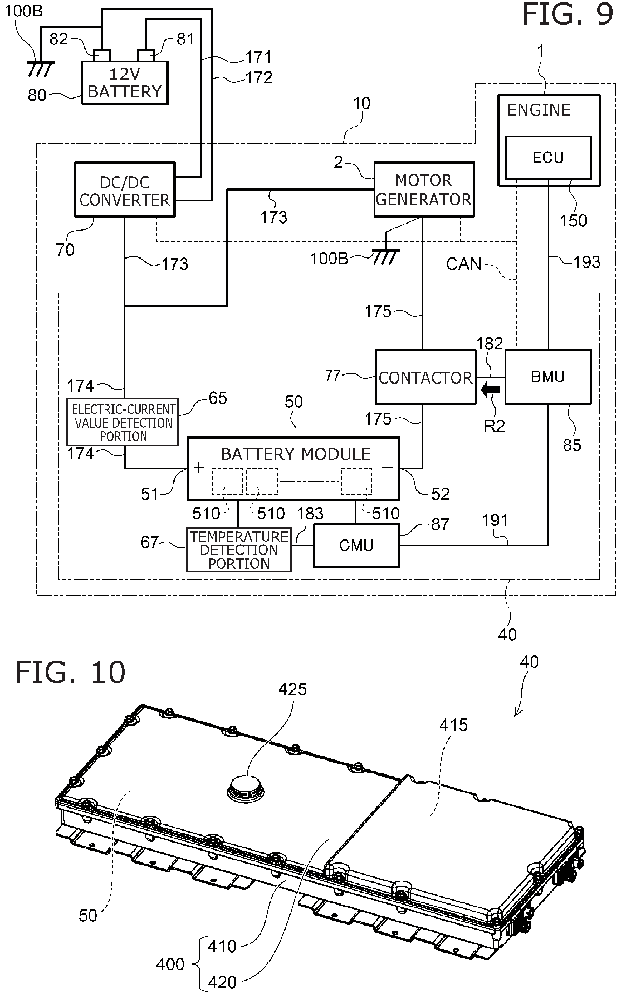

   Fig. 9 is a block diagram illustrating a hybrid system according to another Embodiment.
[Fig. 10]
   Fig. 10 is an appearance perspective view exemplifying another battery pack according to this Embodiment.
[Fig. 11]

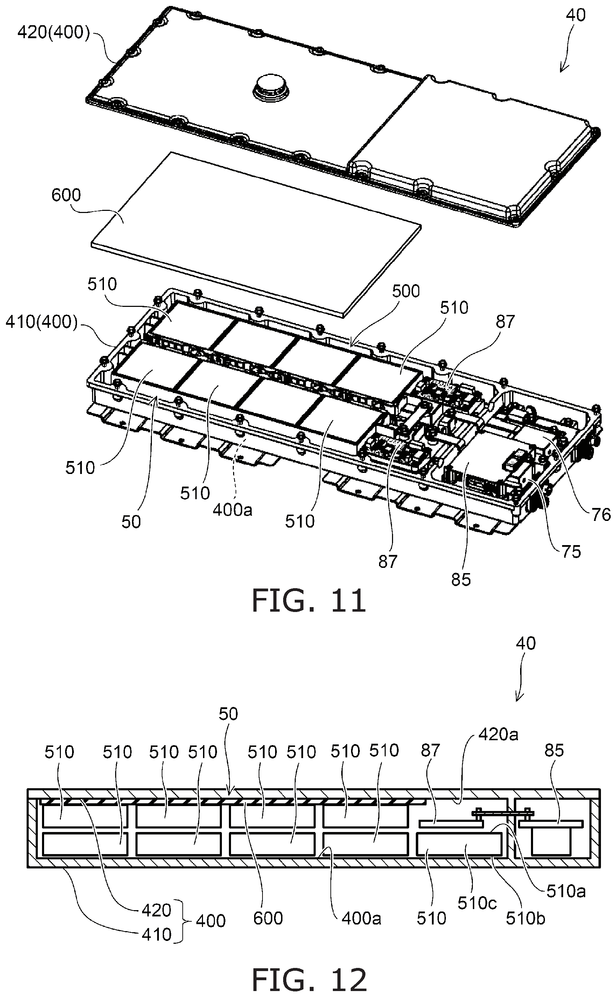

   Fig. 11 is a partial exploded perspective view exemplifying another battery pack according to this Embodiment.
[Fig. 12]
   Fig. 12 is a schematic sectional diagram exemplifying another battery pack according to this Embodiment.
[Fig. 13]

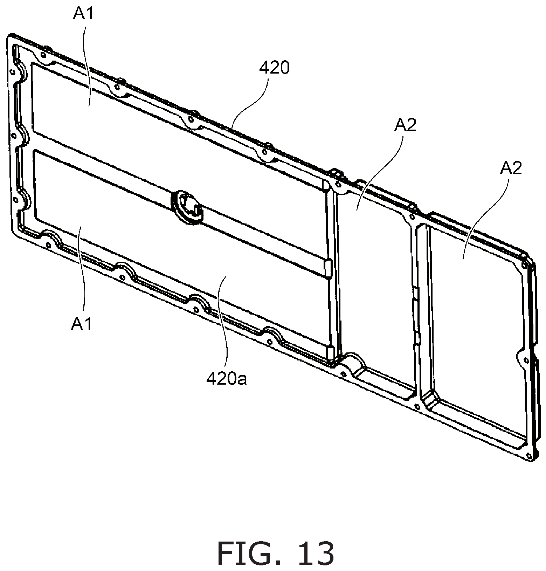

   Fig. 13 is a perspective view exemplifying a ceiling surface of a housing cover.

### Description of Embodiments

Hereinafter, a preferred Embodiment of the present invention will be explained with reference to the drawings.

It is to be noted that, the Embodiment which will be explained below is a preferred specific example of the present invention and thus, various technically preferable limitations are given, but a range of the present invention is not limited to these forms unless there is a description to the effect that the present invention is particularly limited in the following explanation. In addition, the same signs are given to the similar constituent elements, and detailed explanation will be omitted as appropriate.

### (Hybrid System)

Fig. 1 is a block diagram illustrating a hybrid system.

A battery pack 40 to which a housing according to this Embodiment is applied is mounted on a hybrid system 10 shown in Fig. 1. The hybrid system 10 includes an engine 1, a motor generator 2, and the battery pack 40. The hybrid system 10 according to this Embodiment further includes a DC/DC converter 70. The engine 1 is an internal combustion engine and is a diesel engine, for example. The engine 1 is mounted on a vehicle (a passenger car, a small-sized moving body and the like), for example, and industrial machines such as a construction machine, an agricultural machine and the like.

The engine 1 is a supercharging high-output multicylinder diesel engine such as a 3-cylinder engine, a 4-cylinder engine and the like, for example. However, the engine 1 is not limited to a diesel engine. The engine 1 has an ECU (Engine Control Unit) 150. The ECU 150 controls an operation of the engine 1 and controls the motor generator 2 and the DC/DC converter 70 by communicating with the motor generator 2 and the DC/DC converter 70 via a CAN (Controller Area Network), for example.

The motor generator 2 is operated by electricity supplied from the battery pack 40 and supports the engine 1 when power is required at start or at acceleration of a vehicle or the like on which the hybrid system 10 is mounted. In addition, the motor generator 2 converts kinetic energy of an industrial machine or the like on which the hybrid system 10 is mounted to electric energy and generates electricity.

The battery pack 40 has a battery module 50, a positive-electrode side contactor 75, a negative-electrode side contactor 76, an electric-current value detection portion 65, a temperature detection portion 67, a BMU (Battery Management Unit) 85, and a CMU (Cell Management Unit) 87. The battery module 50 is provided as a driving power-supply of the motor generator 2 and supplies electricity to the motor generator 2. The battery module 50 includes at least one battery cell 510. In the hybrid system 10 shown in Fig. 1, such a number of battery cells 510 that is needed to obtain a voltage of 48V, for example, are included in the battery module 50. As the battery cell 510, a lithium-ion battery (LiB), for example, is cited. However, the battery cell 510 in this Embodiment is not necessarily limited to a lithium-ion battery. The battery module 50 has a positive-electrode (+) terminal 51 and a negative-electrode (-) terminal 52.

The positive-electrode side contactor 75 is provided in an electric circuit between the positive-electrode terminal 51 of the battery module 50 and the motor generator 2. Specifically, as shown in Fig. 1, the positive-electrode side contactor 75 is provided on positive-electrode wirings 173, 174 for connecting the positive-electrode terminal 51 of the battery module 50 and the motor generator 2. That is, an electric circuit between the positive-electrode terminal 51 of the battery module 50 and the motor generator 2 includes the positive-electrode wiring 173 and the positive-electrode wiring 174. The positive-electrode side contactor 75 is electrically connected to the ECU 150 by a signal line 181 and opens/closes the positive-electrode wirings 173, 174 on the basis of a control signal transmitted from the ECU 150 through the signal line 181.

It is to be noted that the positive-electrode side contactor 75 may be electrically connected to the BMU 85. In this case, the positive-electrode side contactor 75 opens/closes the positive-electrode wirings 173, 174 on the basis of the control signal transmitted from the BMU 85. In the explanation of this Embodiment, a case in which the positive-electrode side contactor 75 is electrically connected to the ECU 150 by the signal line 181 will be cited as an example.

The negative-electrode side contactor 76 is provided in an electric circuit between the negative-electrode terminal 52 of the battery module 50 and the motor generator 2. Specifically, as shown in Fig. 1, the negative-electrode side contactor 76 is provided on a negative-electrode wiring 175 which connects the negative-electrode terminal 52 of the battery module 50 and the motor generator 2. That is, the electric circuit between the negative-electrode terminal 52 of the battery module 50 and the motor generator 2 includes the negative-electrode wiring 175. The negative-electrode side contactor 76 is electrically connected to the BMU 85 by a signal line 182, and opens/closes the negative-electrode wiring 175 on the basis of a control signal transmitted through the signal line 182 from the BMU 85.

It is to be noted that the negative-electrode side contactor 76 may be electrically connected to the ECU 150. In this case, the negative-electrode side contactor 76 performs opening/closing of the negative-electrode wiring 175 on the basis of the control signal transmitted from the ECU 150. In the explanation of this Embodiment, a case in which the negative-electrode side contactor 76 is electrically connected to the BMU 85 by the signal line 182 will be cited as an example.

The BMU 85 is an example of the "control circuit" of the present invention. The BMU 85 controls a voltage of the entire battery module 50. That is, the BMU 85 is electrically connected to the ECU 150 by a signal line 193 and controls the negative-electrode side contactor 76 on the basis of a control signal transmitted through the signal line 193 from the ECU 150. The ECU 150 and the BMU 85 communicate with each other by CAN, for example, and monitor the other's state.

In addition, the BMU 85 monitors a state of the battery module 50 and can detect abnormality of the battery module 50. For example, the BMU 85 detects overcharge (minor failure) abnormality or overcharge (measure failure) abnormality on the basis of the voltage of the battery cell 510 obtained from the CMU 87. Alternatively, the BMU 85 detects overdischarge (minor failure) abnormality or over discharge (major failure) abnormality on the basis of a voltage of the battery cell 510 obtained from the CMU 87. Alternatively, the BMU 85 detects over-temperature (minor failure) abnormality on the basis of a temperature of the battery cell 510 obtained from the CMU 87. Alternatively, the BMU 85 detects over-current abnormality on the basis of an electric-current value obtained from the electric-current value detection portion 65 on the positive-electrode wiring 174.

The CMU 87 is an example of the "control circuit" of the present invention. The CMU 87 monitors a state of the battery cell 510 included in the battery module 50 and sends information to the BMU 85. When a plurality of the battery cells 510 are included in the battery module 50, the CMU 87 monitors a voltage of each of the battery cells 510 and sends information related to the voltage of each of the battery cells 510 to the BMU 85 via a signal line 191. In addition, the CMU 87 obtains information on a temperature of the battery cell 510 detected by the temperature detection portion 67 through the signal line 183 and sends the information related to the temperature of the battery cell 510 to the BMU 85 via the signal line 191. The CMU 87 may be provided separately from the BMU 85 or may be provided integrally with the BMU 85.

As described above, the negative-electrode wiring 175 electrically connects the negative-electrode terminal 52 of the battery module 50 and the motor generator 2 and becomes a gland 100B. For example, the negative-electrode wiring 175 is connected to a body of a vehicle or the like on which the hybrid system 10 is mounted and is grounded. The positive-electrode wiring 173 electrically connects the positive-electrode terminal 51 of the battery module 50 and the motor generator 2 and electrically connects the motor generator 2 and the DC/DC converter 70. As the hybrid system 10 shown in Fig. 1, when the battery module 50 is a 48V lithium-ion battery, potentials of the positive-electrode wirings 173, 174 with respect to the negative-electrode wiring 175 is 48V.

The DC/DC converter 70 is electrically connected to a battery 80 via a positive-electrode wiring 171 and a negative-electrode wiring 172. As the battery 80, a 12V lead storage battery can be cited, as an example. The negative-electrode wiring 172 electrically connects a negative-electrode terminal 82 of the battery 80 and the DC/DC converter 70 and becomes a gland 100B. For example, the negative-electrode wiring 172 is connected to a body of a vehicle or the like on which the hybrid system 10 is mounted and is grounded. The positive-electrode wiring 171 electrically connects a positive-electrode terminal 81 of the battery 80 and the DC/DC converter 70. As in the hybrid system 10 shown in Fig. 1, when the battery 80 is a 12V lead storage battery, a potential of the positive-electrode wiring 171 with respect to the negative-electrode wiring 172 is 12V.

As described above, the motor generator 2 converts kinetic energy of a vehicle or the like on which the hybrid system 10 is mounted to electric energy and generates electricity by using a regenerative energy or the like. And the motor generator 2 supplies a voltage to the battery module 50 so as to charge the battery module 50 and supplies a voltage to the battery 80 so as to charge the battery 80. Here, when the hybrid system 10 shown in Fig. 1 is cited as an example, a potential of the positive-electrode wiring 173 with respect to the negative-electrode wiring 175 is 48V. That is, a power-generation potential of the motor generator 2 is 48V. On the other hand, a potential of the positive-electrode wiring 171 with respect to the negative-electrode wiring 172 is 12V. Thus, the DC/DC converter 70 converts the voltage of 48V generated by the motor generator 2 to a voltage of 12V. As a result, the motor generator 2 can supply the voltage of 12V to the battery 80 via the DC/DC converter 70 and charge the battery 80.

In addition, the DC/DC converter 70 is electrically connected to the battery module 50 and the battery 80 and can perform charging and discharging between the battery module 50 and the battery 80 on the basis of a control signal transmitted from the ECU 150. For example, the DC/DC converter 70 can perform discharging of the battery module 50 and charging of the battery 80 by converting the voltage and by causing a constant electric-current (10A, for example) to flow from the battery 80 toward the battery module 50. Alternatively, the DC/DC converter 70 can perform discharging of the battery 80 and charging of the battery module 50 by converting the voltage and by causing a constant electric-current (10A, for example) to flow from the battery 80 toward the battery module 50, for example.

The hybrid system 10 according to this Embodiment has a function of capable of safely shutting down an electric circuit which supplies electricity from the battery module 50 to the motor generator 2, when abnormality occurs in the battery module 50 or the entire hybrid system 10 is shut down.

When an ignition switch is turned on, for example, the ECU 150 electrically connects the positive-electrode wiring 174 by executing control of transmitting a control signal to the positive-electrode side contactor 75 via the signal line 181 and closing the positive-electrode side contactor 75. In addition, the BMU 85 electrically connects the negative-electrode wiring 175 by executing control of closing the negative-electrode side contactor 76 on the basis of the control signal transmitted from the ECU 150 via the signal line 193. As a result, the battery module 50 can supply electricity to the motor generator 2.

On the other hand, when the ignition switch is turned off, for example, the ECU 150 electrically shuts down the positive-electrode wiring 174 by executing control of transmitting a control signal to the positive-electrode side contactor 75 through the signal line 181 and opening the positive-electrode side contactor 75. In addition, the BMU 85 electrically shuts down the negative-electrode wiring 175 by executing control of opening the negative-electrode side contactor 76 on the basis of the control signal transmitted from the ECU 150 via the signal line 193. As a result, the supply of electricity from the battery module 50 to the motor generator 2 is stopped.

In addition, when the BMU 85 detects abnormality of the battery module 50, for example, the ECU 150 electrically shuts down the positive-electrode wiring 174 by executing control of transmitting a first shut-down signal R1 to the positive-electrode side contactor 75 via the signal line 181 and opening the positive-electrode side contactor 75. In addition, the BMU 85 electrically shuts down the negative-electrode wiring 175 by executing control of transmitting a second shut-down signal R2 to the negative-electrode side contactor 76 via the signal line 182 singularly and not depending on a control signal transmitted from the ECU 150 and opening the negative-electrode side contactor 76.

Alternatively, as described above, the ECU 150 and the BMU 85 communicate with each other and monitors the other's state. Thus, when the ECU 150 detects abnormality of the BMU 85, the ECU 150 electrically shuts down the positive-electrode wiring 174 by executing control of transmitting the first shut-down signal R1 to the positive-electrode side contactor 75 by the signal line 181 and opening the positive-electrode side contactor 75. On the other hand, when the BMU 85 detects abnormality of the ECU 150, the BMU 85 electrically shuts down the negative-electrode wiring 175 by executing control of transmitting the second shut-down signal R2 to the negative-electrode side contactor 76 via the signal line 182 singularly and not depending on a control signal transmitted from the ECU 150 and opening the negative-electrode side contactor 76.

According to the above-described hybrid system 10, two contactors (in this Embodiment, the positive-electrode side contactor 75 and the negative-electrode side contactor 76) are provided in the electric circuit which supplies electricity from the battery module 50 to the motor generator 2 (in this Embodiment, the positive-electrode wirings 173, 174 and the negative-electrode wiring 175), and the ECU 150 controls the positive-electrode side contactor 75, while the BMU 85 controls the negative-electrode side contactor 76. Thus, even when abnormality occurs in the battery module 50 or when abnormality occurs in either one of the ECU 150 and the BMU 85, the hybrid system 10 according to this Embodiment can shut down the electric circuit which supplies electricity from the battery module 50 to the motor generator 2. As a result, the hybrid system 10 can improve the safety related to the battery module 50 which supplies electricity to the motor generator 2.

### (Battery Pack)

Fig. 2 is an appearance perspective view exemplifying a battery pack according to this Embodiment.

Fig. 3 is a partial exploded perspective view exemplifying a battery pack according to this Embodiment.

In Fig. 3, a state in which a housing cover 420 in a housing 400 of the battery pack 40 is open is shown.

The battery pack 40 includes the housing 400 for accommodating the battery module 50 and the BMU 85, which is a control circuit. The housing 400 has a housing main body 410 and the housing cover 420. The housing main body 410 and the housing cover 420 are formed by casting using a metal material including aluminum, for example. On a joint between the housing main body 410 and the housing cover 420, a seal (not shown) is provided, and by covering the housing main body 410 with the housing cover 420 and by fastening and fixing them with a screw, for example, an inside of the housing 400 is brought into a water-tight state. On a side surface of the housing main body 410, external terminals 451, 452 are provided. The external terminals 451, 452 are terminals which output electricity of the battery pack 40 or a predetermined signal to an outside and inputs a signal from the ECU 150 or the like into the battery pack 40. When the external terminals 451, 452 are provided so as to protrude from a side surface of the housing main body 410 to the side (in a longitudinal direction, for example), it contributes to thinning of the battery pack 40.

The housing main body 410 has a first accommodating portion 411 for accommodating the battery module 50 and a second accommodating portion 412 for accommodating the BMU 85, which is an example of a control circuit. In the housing main body 410, a partition wall part 415 is provided between the first accommodating portion 411 and the second accommodating portion 412. That is, one side with the partition wall part 415 as a boundary is the first accommodating portion 411, while the other side is the second accommodating portion 412. The first accommodating portion 411 accommodates the battery module 50, and the second accommodating portion 412 accommodates the BMU 85, whereby, in the housing 400, the battery module 50 and the BMU 85 are divided by the partition wall part 415. The first accommodating portion 411 is preferably larger than the second accommodating portion 412. Specifically, a distance from a side wall 410b (see Fig. 4) of the housing main body 140 to the partition wall part 415 is longer than a distance from a side wall 410c (see Fig. 4) of the housing main body 410 to the partition wall part 415. As a result, more battery cells 510 can be accommodated in the first accommodating portion 411.

By means of the division by this partition wall part 415, even if an internal pressure rises in the first accommodating portion 411, its influence can be suppressed by the partition wall part 415 so as not to extend to the second accommodating portion 412. For example, a valve (safety valve) for releasing a gas inside is provided on the battery cell 510 included in the battery module 50. When a gas is generated inside of the battery cell 510 due to abnormality such as overcharge, internal short-circuit or the like of the battery cell 510, and a pressure inside exceeds a predetermined value, for example, this valve is opened so as to release the gas. When the valve of the battery cell 510 is operated, the gas inside the battery cell 510 is released to the outside and is released into the housing 400. Since the housing 400 is constituted in the water-tight state, the internal pressure of the housing 400 rapidly rises due to the release of the gas from the battery cell 510. Since a large number of wirings with narrow pitches and thin lines and connector terminals are provided in the control circuit such as the BMU 85, resistance against deformation or damage is not high. Therefore, when the internal pressure of the housing 400 is transmitted to the control circuit by means of the gas release from the battery cell 510, there is a possibility that the wiring of the control circuit or the terminal of the connector is deformed or damaged.

As in this Embodiment, since the housing 400 has the partition wall part 415 provided between the first accommodating portion 411 for accommodating the battery module 50 and the second accommodating portion 412 for accommodating the control circuit, even when the internal pressure of the first accommodating portion 411 rapidly rises due to the gas release from the battery cell 510, transmission of the pressure to the second accommodating portion 412 can be suppressed by the partition wall part 415, and the control circuit accommodated in the second accommodating portion 412 can be protected from the pressure more easily.

In the second accommodating portion 412 divided from the first accommodating portion 411 by the partition wall part 415, the positive-electrode side contactor 75 or the negative-electrode side contactor 76 may be accommodated other than the control circuit. In addition, in the second accommodating portion 412, the CMU 87, which is an example of the control circuit, may be accommodated. As a result, other than the control circuit, transmission of an influence of the internal-pressure rise in the first accommodating portion 411 to the positive-electrode side contactor 75 and the negative-electrode side contactor 76 can be avoided, too. That is, such a constitution is preferable that the circuit or connector susceptible to an influence of a pressure is accommodated in the second accommodating portion 412. Particularly, it may be so constituted that the battery cell 510 is disposed in the first accommodating portion 411, and all the electronic components other than the battery cell 510 are disposed in the second accommodating portion 412, whereby the electronic components can be effectively protected.

In addition, the number of the partition wall parts 415 is not limited to one, but the housing 400 may include a plurality of the partition wall parts 415. When the plurality of partition wall parts 415 are provided, a division in which the battery module 50 is accommodated is the first accommodating portion 411, and a division in which the battery module 50 is not accommodated is the second accommodating portion 412.

The partition wall part 415 may be provided so as to surround the control circuit in the housing 400 or may be provided over the whole area between the two side walls facing each other of the housing main body 410. When the partition wall part 415 is provided so as to surround the control circuit, the control circuit can be surrounded in a relatively small area and becomes unsusceptible to a pressure change on an outer side of the partition wall part 415. In addition, when the partition wall part 415 is provided on the whole area between the two side walls facing each other of the housing main body 410, the first accommodating portion 411 and the second accommodating portion 412 can be easily divided by the partition wall part 415, the partition wall part 415 plays a role of a beam which connects the two side walls to each other, and strength of the housing 400 is increased.

The partition wall part 415 is preferably provided from a bottom surface of the housing main body 410 to reach a ceiling surface 420a of the housing cover 420 (see Fig. 5 and Fig. 6). As a result, transmission of a pressure from the first accommodating portion 411 to the second accommodating portion 412 is effectively suppressed.

### (Housing)

Fig. 4 is an appearance perspective view exemplifying a housing main body of a housing according to this Embodiment.

Fig. 5 is an appearance perspective view exemplifying a housing cover of the housing according to this Embodiment.

Fig. 5 illustrates an appearance perspective view when viewed from the ceiling surface 420a side of the housing cover 420.

As shown in Fig. 4, the housing main body 410 is provided in a shallow dish shape, for example. The housing main body 410 has a bottom surface 410a and four side walls 410b to 410e provided around the bottom surface 410a. In the four side walls 410b to 410e, a main body side partition wall part 4151 in the partition wall part 415 is provided so as to go across a space between the two side walls 410d, 410e facing each other.

On the other hand, as shown in Fig. 5, on the ceiling surface 420a of the housing cover 420, a cover side partition wall part 4152 in the partition wall part 415 is provided. The cover side partition wall part 4152 is provided at a position of the ceiling surface 420a facing the main body side partition wall part 4151, when the housing cover 420 covers the housing main body 410. As a result, when the housing cover 420 is mounted on the housing main body 410, the main body side partition wall part 4151 and the cover side partition wall part 4152 face each other and overlap, and one partition wall part 415 is constituted.

The housing cover 420 may include a vent valve 425 which is opened when the internal pressure of the first accommodating portion 411 of the housing 400 reaches a predetermined pressure. The vent valve 425 is preferably provided so as to be operated when a gas is released even from any one of the battery cells 510 included in the battery module 50. As a result, a rise of the internal pressure which does not occur in the first accommodating portion 411 can be released as soon as possible so as not to influence the control circuit of the second accommodating portion 412.

Fig. 6 is a schematic sectional diagram exemplifying the battery pack using the housing according to this Embodiment.

Fig. 7 is an enlarged schematic sectional diagram of a periphery of the partition wall part shown in Fig. 6.

Fig. 8 is a partial perspective view exemplifying a constitution around the partition wall part.

In the first accommodating portion 411 of the housing main body 410, the battery module 50 is accommodated, and in the second accommodating portion 412, the BMU 85, which is a control circuit, is accommodated. Between the battery module 50 and the BMU 85, a bus bar 200, which is a conductor for causing the both to be electrically conducted, is provided. The bus bar 200 is constituted by a metal (copper, for example) plate material in a predetermined shape. In this Embodiment, since there is the partition wall part 415 between the first accommodating portion 411 and the second accommodating portion 412, the bus bar 200 is provided between the first accommodating portion 411 and the second accommodating portion 412 so as to cross the partition wall part 415. It is to be noted that, in this Embodiment, the case of using the bus bar 200 is an example, but a conductor other than the bus bar 200 may be applied.

For example, at each of the positions where the bus bar 200 of the main body side partition wall part 4151 crosses and a position where the bus bar 200 of the cover side partition wall part 4152 crosses, a recess part 201 is provided, and when the main body side partition wall part 4151 and the cover side partition wall part 4152 are caused to face and overlap each other, the recess parts 201 of the both become holes provided in the partition wall part 415. The hole corresponds to a sectional shape of the bus bar 200. When the bus bar 200 is made to pass through this hole, the bus bar 200 cross the partition wall part 415. When the housing cover 420 is mounted on the housing main body 410, this hole is blocked by the bus bar 200. As a result, even when the hole by the recess part 201 is constituted in the partition wall part 415, a path of pressure leakage between the first accommodating portion 411 and the second accommodating portion 412 is effectively shut off. It is to be noted that a surface of the bus bar 200 is covered with an insulating member (not shown), and the partition wall part 415 and the bus bar 200 are not conducted with each other. A member with high sealing performance (liquid-state gasket or the like) may be interposed between the bus bar 200 and the partition wall part 415.

In addition, when it is necessary to pass a wiring other than the bus bar 200 (a wiring for sending a signal for a temperature sensor provided in the battery module 50 or voltage detection to the BMU 85, for example) between the first accommodating portion 411 and the second accommodating portion 412, a recess part 202 (see Fig. 8) may be provided in the partition wall part 415. When the main body side partition wall part 4151 and the cover side partition wall part 4152 are faced and made to overlap each other, the recess part 202 becomes a through hole provided in the partition wall part 415. The wiring is passed between the first accommodating portion 411 and the second accommodating portion 412 through this through hole. It is to be noted that a seal material is preferably provided between the through hole and the wiring. As a result, pressure leakage in the through hole of the partition wall part 415 is suppressed.

According to this Embodiment as above, even when an internal-pressure rise occurs in the housing 400, the housing 400 of the battery pack 40 and the battery pack 40 which can suppress an influence on components in the housing 400 can be provided.

### (Another Embodiment)

Fig. 9 is a block diagram illustrating a hybrid system according to another Embodiment.

As shown in Fig. 9, the hybrid system 10 may be constituted to include one contactor 77. The contactor 77 is provided between the battery module 50 and the BMU 85. In the example shown in Fig. 9, the contactor 77 is provided between the negative-electrode terminal 52 of the battery module 50 and the BMU 85, but the contactor 77 may be provided between the positive-electrode terminal 51 of the battery module 50 and the BMU 85.

When the BMU 85 detects abnormality of the battery module 50, the second shut-down signal R2 is transmitted from the BMU 85 to the contactor 77, and control to open the contactor 77 is executed. As a result, the negative-electrode wiring 175 is electrically shut down, and safety related to the battery module 50 is ensured.

### (Another Battery Pack)

Subsequently, another battery pack will be explained.

It is to be noted that, when constituent elements of another battery pack 40 are similar to the constituent elements of the battery pack 40 described above in relation with Fig. 2 to Fig. 8, duplicated explanation will be omitted as appropriate, and different points will be mainly explained below.

Fig. 10 is an appearance perspective view exemplifying another battery pack according to this Embodiment.

Fig. 11 is a partial exploded perspective view exemplifying another battery pack according to this Embodiment.

In Fig. 11, a state in which the housing cover 420 in the housing 400 of the battery pack 40 and a heat-conductive member 600 are open is illustrated.

Fig. 12 is a schematic sectional diagram exemplifying another battery pack according to this Embodiment.

The battery pack 40 includes the battery module 50, a control circuit including the BMU 85 and the CMU 87, and the housing 400 accommodating the battery module 50 and the control circuit. The housing main body 410 and the housing cover 420 are formed by casting using a metal material including aluminum, for example. On a joint between the housing main body 410 and the housing cover 420, a seal (not shown) is provided, and by covering the housing main body 410 with the housing cover 420 and by fastening and fixing them with a screw, for example, an inside of the housing 400 is brought into a water-tight state.

The battery module 50 accommodated in the housing 400 has a plurality of the battery cells 510, for example. In one unit of the housing 400, one unit of the battery module 50 may be accommodated or a plurality of the battery modules 50 may be accommodated.

The battery cell 510 is provided in a substantially cuboid shape having planar parts facing each other (an upper surface part 510a and a bottom surface part 510b), and four side surface parts 510c having an area smaller than those of the upper surface part 510a and the bottom surface part 510b. And the battery cells 510 are disposed in parallel along the bottom surface 400a such that the bottom surface part 510b faces the bottom surface 400a of the housing 400.

The battery module 50 may have a plurality of the battery cells 510. In this case, the plurality of battery cells 510 are preferably disposed in parallel along the bottom surface 400a of the housing 400. In addition, the battery cell 510 may be disposed in one stage on the housing 400 or may be disposed in plural stages. In the case of the plural stages, it is preferable that the upper surface part 510a and the bottom surface part 510b of the two battery cells 510 in a stacking direction are disposed so as to face each other.

Between the battery module 50 accommodated in the housing 400 and the housing 400, the heat-conductive member 600 having insulation is provided. For the heat-conductive member 600, a material having insulation and heat conductivity such as a silicone sheet, for example, is used. The heat-conductive member 600 is disposed between the upper surface part 510a of the battery cell 510 and the ceiling surface 420a of the housing cover 420 (housing 400) facing the bottom surface 400a of the housing 400. It is preferable that the heat-conductive member 600 is in contact with each of the upper surface part 510a of the battery cell 510 and the ceiling surface 420a of the housing cover 420. It is to be noted that some member may be interposed between the heat-conductive member 600 and the upper surface part 510a and between the heat-conductive member 600 and the ceiling surface 420a.

Since the bottom surface part 510b is disposed as the battery cell 510 so as to face the bottom surface 400a of the housing 400, the upper surface part 510a of the battery cell 510 is faced with the ceiling surface 420a of the housing cover 420. In the battery cell 510, an area of the upper surface part 510a is larger than an area of the side surface part 510c and thus, by bringing the upper surface part 510a into contact with the heat-conductive member 600 (including a case of contact via the member), a heat generated in the battery cell 510 can be effectively transmitted to the heat-conductive member 600. In addition, since the heat-conductive member 600 is brought into contact with the ceiling surface 420a of the housing cover 420 (including a case of contact via the member), the heat having been transmitted from the battery cell 510 to the heat-conductive member 600 is effectively transmitted to the housing cover 420 and can be easily released from the housing 400 to the outside easily.

The battery pack 40 may have a plurality of the battery modules 50. In this case, the plurality of battery modules 50 are preferably disposed in parallel along the bottom surface 400a of the housing 400. As a result, since the upper surface parts 510a of the battery cells 510 do not overlap in the plurality of battery modules 50, it is advantageous on a heat dissipation surface.

In such a configuration that the plurality of battery modules 50 are disposed in parallel, the heat-conductive member 600 may have a part disposed between the adjacent battery modules 50 in the plurality of battery modules 50. By disposing a part of the heat-conductive member 600 between the adjacent battery modules 50, a heat can be easily transmitted not only from the upper surface part 510a of the battery cell 510 but also from a part of the side surface part 510c to the heat-conductive member 600.

Fig. 13 is a perspective view exemplifying a ceiling surface of the housing cover.

The housing cover 420 is formed by casting by aluminum, for example. The ceiling surface 420a of the housing cover 420 has a first area A1 facing the battery module 50 (see Fig. 11) and a second area A2 other than that. In the housing cover 420, a surface roughness of the first area A1 is preferably set lower than the surface roughness of the second area A2. For example, in a state in which the housing cover 420 is formed by casting, a surface of a mold by casting is transferred both to the first area A1 and the second area A2, and the surface roughness is relatively rough. Thus, by performing cutting or the like on the first area A1, machining is performed with the surface roughness of the first area A1 lower than that of the second area A2. As a result, a degree of close contact between the first area A1 in the ceiling surface 420a of the housing cover 420 and the heat-conductive member 600 is improved, and the heat can be transmitted from the heat-conductive member 600 to the housing cover 420 more effectively.

According to this Embodiment as above, the battery pack 40 which can efficiently release a heat of the battery cell 510 to an outside can be provided.

The Embodiment of the present invention has been explained as above. However, the present invention is not limited to the above-described Embodiment but is capable of various changes within a range not departing from the scope of claims. For example, the configuration of the above-described Embodiment may be partially omitted or arbitrarily combined differently from the above.

### Reference Signs List

- 1: Engine
- 2: Motor generator
- 10: Hybrid system
- 40: Battery pack
- 50: Battery module
- 51: Positive-electrode terminal
- 52: Negative-electrode terminal
- 65: Electric-current value detection portion
- 67: Temperature detection portion
- 70: DC/DC converter
- 75: Positive-electrode side contactor
- 76: Negative-electrode side contactor
- 77: Contactor
- 80: Battery
- 81: Positive-electrode terminal
- 82: Negative-electrode terminal
- 85: BMU
- 87: CMU
- 100B: Gland
- 150: ECU
- 171: Positive-electrode wiring
- 172: Negative-electrode wiring
- 173: Positive-electrode wiring
- 174: Positive-electrode wiring
- 175: Negative-electrode wiring
- 181: Signal line
- 182: Signal line
- 183: Signal line
- 191: Signal line
- 193: Signal line
- 200: Bus bar
- 201: Recess part
- 202: Recess part
- 400: Housing
- 400a: Bottom surface
- 410: Housing main body
- 410a: Bottom surface
- 410b: Side wall
- 410c: Side wall
- 410d: Side wall
- 410e: Side surface
- 411: First accommodating portion
- 412: Second accommodating portion
- 415: Partition wall part
- 420: Housing cover
- 420a: Ceiling surface
- 425: Vent valve
- 451: External terminal
- 452: External terminal
- 510: Battery cell
- 510a: Upper surface part (planar part)
- 510b: Bottom surface part (planar part)
- 510c: Side surface part
- 600: Heat-conductive member
- 4151: Main body side partition wall part
- 4152: Cover side partition wall part
- A1: First area
- A2: Second area
- R1: First shut-down signal
- R2: Second shut-down signal

## Claims

1. A housing of a battery pack mounted on a hybrid system, the housing of the battery pack comprising:
a housing main body having a first accommodating portion for accommodating a battery module for supplying electricity to a motor generator of the hybrid system and a second accommodating portion for accommodating a control circuit of the battery module;
a housing cover mounted on the housing main body; and
a partition wall part which is provided between the first accommodating portion and the second accommodating portion in the housing main body and partitions a space of the first accommodating portion and a space of the second accommodating portion from each other.

2. The housing of the battery pack according to claim 1, wherein
the partition wall part is provided such that the partition wall part reaches a ceiling surface of the housing cover from a bottom surface of the housing main body.

3. The housing of the battery pack according to claim 1 or 2, wherein
the partition wall part is provided across a whole area between two side walls facing each other of the housing main body.

4. The housing of the battery pack according to claim 3, wherein
the partition wall part has a main body side partition wall part provided on a side of the housing main body and a cover side partition wall part provided on a side of the housing cover, wherein
when the housing cover is mounted on the housing main body, the partition wall part is constituted by the main body side partition wall part and the cover side partition wall part facing each other.

5. The housing of the battery pack according to claim 3, wherein
a vent valve which is provided in the housing cover, and when an internal pressure of the first accommodating portion reaches a predetermined pressure, the vent valve is opened.

6. The housing of the battery pack according to claim 1, wherein
the housing main body is provided in a shallow dish shape;
the first accommodating portion and the second accommodating portion are disposed in parallel along a bottom surface of the housing main body; and
the housing cover is provided such that one unit of the housing cover covers the first accommodating portion and the second accommodating portion.

7. A battery pack comprising the housing of the battery pack according to any one of claims 1 to 6, wherein
the control circuit includes a Battery Management Unit (BMU) for controlling an entire voltage of the battery module.

8. The battery pack according to claim 7, the battery pack further comprising a bus bar for causing the battery module and the control circuit to be conducted, wherein
the bus bar is provided between the first accommodating portion and the second accommodating portion such that the bus bar cross the partition wall part.

9. The battery pack according to claim 7, the battery pack further comprising a contactor for opening/closing a wiring provided between the battery module and the motor generator, wherein
the contactor is accommodated in the second accommodating portion.
